# EUROPÄISCHE PATENTANMELDUNG

(11) **EP 1 666 868 A1**
(43) Veröffentlichungstag der Anmeldung: **07.06.2006**
(21) Anmeldenummer: 04028404.4
(22) Anmeldetag: 01.12.2004
(51) Int. Cl.: G01N 21/03

(54) **Optische Langwegzelle zur Messung von Gaskonzentrationen**

(71) Anmelder: ABB PATENT GmbH, 68526 Ladenburg (DE)
(72) Erfinder: Fabinski, Walter, Dipl.-Ing., 65830 Kriftel (DE); Laschinski, Gerd, 40627 Düsseldorf (DE)
(74) Vertreter: Schmidt, Karl Michael

(57) **Zusammenfassung**

Optische Langwegzelle zur Messung von Gaskonzentrationen, umfassend ein hohlzylinderartiges Messrohr (1), an dessen gegenüberliegenden parallelen Stirnseiten (2a,2b) zueinander konfokal angeordnete sphärische Spiegel (7,8) zur Erzeugung einer optischen Wegstrecke durch wechselseitiges Reflektieren eines Lichtstrahl vorgesehen sind, der durch eine stirnseitige optische Eintrittsöffnung (10) in das Messrohr (1) gelangt und nach Passieren der optischen Wegstrecke durch eine ebenfalls stirnseitige optische Austrittsöffnung (11) das Messrohr (1) verlässt, um durch eine hier nachgeschaltete Auswertung der Absorptionsverluste des Lichtstrahls aufgrund eines durch das Messrohr (1) geleiteten Gases die Gaskonzentration zu ermitteln, wobei mindestens zwei an einer Stirnseite (2a) des Messrohres (1) benachbart angeordnete sphärische Spiegel (7a,7b) aus einem geteilten sphärischen Spiegelelement (7) gebildet sind, das zur Erzeugung der beiden sphärische Spiegel (7a,7b) einen dazwischenliegenden Öffnungswinkel α aufweist. Die Lagefixierung der beiden sphärischen Spiegel (7,8) ermöglicht einen justagefreien, einfachen und robusten Aufbau der optischen Langwegzelle.

## Beschreibung

Die vorliegende Erfindung betrifft eine optische Langwegzelle zur Messung von Gaskonzentrationen, umfassend ein hohlzylinderartiges Messrohr, an dessen gegenüberliegenden parallelen Stirnseiten zueinander konfokal angeordnete sphärische Spiegel zur Erzeugung einer optischen Wegstrecke durch wechselseitiges Reflektieren eines Lichtstrahls vorgesehen sind, der durch eine stirnseitige optische Eintrittsöffnung in das Messrohr gelangt und nach Passieren der optischen Wegstrecke durch eine ebenfalls stirnseitige optische Austrittsöffnung das Messrohr verlässt, um durch eine hier nachgeschaltete Auswertung der Absorptionsverluste des Lichtstrahls aufgrund eines durch das Messrohr geleiteten Gases die Gaskonzentration zu ermitteln.

Derartige optische Langwegzellen werden vornehmlich zur Messung kleiner Gaskonzentrationen in der Forschung sowie auch in der Industrie eingesetzt.

Aus dem Fachartikel "Long optical paths of large aperture" (J.U. White, J.Opt. Soc. Am., Ausgabe 32 von 1942, Seite 285) geht eine optische Langwegzelle der hier interessierenden Art hervor. Diese wird in Fachkreisen auch als "White-Zelle" bezeichnet. Die seither bekannte Langwegzelle besteht aus drei sphärischen Spiegeln mit identischen Krümmungsradien. Die Spiegel sind gegenüberliegend an Stirnseiten eines hohlzylinderartigen Messrohres konfokal zueinander ausgerichtet angeordnet und dienen durch Erzeugung von Reflektionen einer Vergrößerung der innerhalb des Messrohres nutzbaren optischen Wegstrecke, so dass selbst geringe Gaskonzentrationen mittels eines relativ kompaktbauenden Messrohres ermittelbar sind. Zur Realisierung einer langen optischen Wegstrecke von bis zu 4 Metern Länge befindet sich der Krümmungsmittelpunkt des an der einen Stirnseite des Messrohres angeordneten sphärischen Spiegels mittig zwischen Krümmungsmittelpunkten von zwei benachbart an der gegenüberliegenden Stirnseite des Messrohres angeordneten Spiegeln. Da die Brennweite eines sphärischen Spiegels durch dessen halben Krümmungsradius gegeben ist, bildet der einzelne Spiegel die beiden benachbarten einander gegenüberliegenden Spiegel ineinander ab. Alle von dem einen der beiden benachbarten Spiegel ausgehenden Strahlen gelangen so auf den gegenüberliegenden einzelnen Spiegel und treffen auch auf den anderen der beiden benachbarten Spiegel auf. Das Messrohr weist des Weiteren eine optische Eintrittsöffnung für einen Lichtstrahl in das Messrohr auf, welche benachbart zu dem einzelnen Spiegel angeordnet ist. Eine hierzu korrespondierende optische Austrittsöffnung befindet sich auf derselben Stirnseite des Messrohres. Durch diese optische Austrittsöffnung verlässt der durch die Absorptionsverluste geschwächte Lichtstrahl wieder das Messrohr. Nach Ermittlung der aufgetretenen Absorptionsverluste durch eine geeignete Sensortechnik ist die Gaskonzentration innerhalb des Rohres bestimmbar. Zur Messung durchströmt das Messgas das Messrohr ausgehend von einem Einlassstutzen zu einem Auslassstutzen, welche außen am Messrohr angeordnet sind.

Durch die vorstehend erläuterte spezielle konfokale Anordnung der sphärischen Spiegel innerhalb des Messrohres wird die Eintrittsöffnung also auf die Austrittsöffnung abgebildet. Die Zwischenbilder der Eintrittsöffnung werden abwechselnd von den benachbart zueinander angeordneten sphärischen Spiegeln erzeugt und entstehen auf dem gegenüberliegenden einzelnen Spiegel in diskreten Abständen. Die Anzahl der Zwischenbilder auf dem letztgenannten Spiegel hängt von der Verkippung der beiden benachbart zueinander angeordneten Spiegeln ab. Je mehr Zwischenbilder auf dem einzelnen Spiegel entstehen, desto größer ist die optische Wegstrecke innerhalb der Langwegzelle. Die optische Wegstrecke lässt sich somit über die Justage der beiden benachbart zueinander angeordneten Spiegel einstellen, welche insoweit relativ zum Messrohr bewegbar montiert sind.

Diese herkömmliche bewegbare Montage der beiden benachbart zueinander an derselben Stirnseite des Messrohres angeordneten sphärischen Spiegel führt jedoch zu dem Problem, dass zur korrekten Einstellung einer langen optischen Wegstrecke eine recht feinfühlige und zeitaufwendige Justage erforderlich ist. Außerdem kann es während des Betriebes der optischen Langwegzelle des Standes der Technik zu Verstellungen der justierten Spiegel kommen, was zu einer Verfälschung des Messergebnisses führt. Derartige Verstellungen resultieren in der Praxis aus ungewollten äußeren mechanischen Einflüssen, wie Vibrationen und dergleichen.

Es ist daher die Aufgabe der vorliegenden Erfindung, eine optische Langwegzelle zur Messung von Gaskonzentrationen zu schaffen, die sich durch einen justagefreien, einfachen und robusten Aufbau auszeichnet.

Die Aufgabe wird ausgehend von einer optischen Langwegzelle gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die mindestens zwei an einer Stirnseite des Messrohres benachbart angeordneten sphärischen Spiegel aus einem einzigen geteilten sphärischen Spiegelelement gebildet sind, das zur Erzeugung der beiden sphärischen Spiegel einen dazwischenliegenden Öffnungswinkel α aufweist.

Der Vorteil der erfindungsgemäßen Lösung liegt insbesondere darin, dass sich in Folge der Teilung eines einzigen sphärischen Spiegelelements in einfacher Weise die sich für die erfindungsgegenständliche Anwendung geeigneten beiden benachbarten sphärischen Spiegel erzeugen lassen. Die Lagefixierung der so erzeugten beiden sphärischen Spiegel lässt sich wegen der aneinanderstoßenden Trennlinie leicht bewerkstelligen. Zur Lagefixierung muss lediglich darauf geachtet werden, dass der gewünschte feste Öffnungswinkel α entsteht. Weitere Justagemaßnahmen sind entbehrlich.

Da die erfindungsgemäße relative Anordnung der beiden benachbarten sphärischen Spiegel zueinander im Zuge einer Vormontage realisiert werden kann, ist die Endmontage der optischen Langwegzelle in einfacher Weise und justagefrei möglich.

Vorzugsweise besteht das zu teilende gemeinsame Spiegelelement aus einem runden, an den Innendurchmesser des Messrohrs angepassten konkaven Spiegel, der durch ein die beiden sphärischen Spiegel bildendes Teilen und wieder Zusammensetzen des Öffnungswinkels α gefertigt ist. Hierbei kann der gewünschte Öffnungswinkel α mittels einer Aufnahmevorrichtung zum relativen Fixieren der beiden sphärischen Spiegel gebildet werden. Die Aufnahmevorrichtung gibt dabei durch Formschluss mit den beiden sphärischen Spiegeln die gewünschte Lage vor. Alternativ hierzu ist es auch möglich, den Öffnungswinkel mittels einer einfache Klebeverbindung zwischen den beiden sphärischen Spiegeln zu bilden, was allerdings eine geeignete Hilfsvorrichtung zum Fixieren der beiden sphärischen Spiegel während des Klebevorgangs erfordert. Die so unter dem Öffnungswinkel α aneinandergeklebten beiden sphärischen Spiegel können dann als ein Bauteil der Stirnseite des Messrohres fixiert werden.

Gemäß einer die Erfindung verbessernde Maßnahme kann die Aufnahmevorrichtung für die beiden benachbarten sphärischen Spiegel (oder die beiden aneinandergeklebten benachbarten sphärischen Spiegel) direkt in ein separates Deckelelement integriert werden, mit welchem das Messrohr stirnseitig verschließbar ist. Zur gasdichten Verbindung zwischen dem Messrohr und dem lösbar hieran befestigten Deckelelement empfiehlt es sich, dazwischen einen Dichtring aus einem elastomeren Material anzuordnen.

Gemäß einer anderen, die Erfindung verbessernde Maßnahme wird vorgeschlagen, dass der dem geteilten Spiegelelement gegenüberliegende separate sphärische Spiegel zur Bildung der hier vorzusehenden optischen Eintrittsöffnung sowie der optischen Austrittsöffnung entsprechend zugeordnete, für den Lichtstrahl transparente Bereiche aufweist, so dass die optische Eintrittsöffnung benachbart zur optischen Austrittsöffnung an derselben Stirnseite des Messrohres angeordnet ist. Diese Realisierung für die Eintritts- und Austrittsöffnung am Messrohr trägt zu einem möglichst kompakten Aufbau der optischen Langwegzelle bei.

Vorzugsweise kann dabei der sphärische Spiegel zur Bildung der optischen Eintrittsöffnung und der optischen Austrittsöffnung aus einem runden, konkaven Spiegel hergestellt werden, der aus einem für den Lichtstrahl transparenten Substrat besteht, auf dem nur teilweise eine Verspiegelung derart aufgebracht ist, dass die optische Eintrittsöffnung sowie die optische Austrittsöffnung unverspiegelt bleiben.

Vorteilhafterweise können innerhalb des Messrohres im Bereich der Spiegel elektrische Mittel zum Beheizen vorgesehen werden, um ein Beschlagen der Spiegel während einer Messung zu verhindern. Im Falle der Anordnung der Spiegel auf lösbar am Messrohr montierte Deckelelemente können diese Mittel zum Beheizen - beispielsweise elektrische Heizstäbe - direkt in das Deckelelement integriert werden.

Weitere die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig.1: einen Längsschnitt durch eine optische Langwegzelle zur Messung von Gaskonzentrationen
- Fig.2: eine Detailansicht eines geteilten sphärischen Spiegelelements, das an einer der Stirnseiten des Messrohres angeordnet ist, und
- Fig.3: eine Detailansicht eines einzelnen Spiegelelements, das an der anderen Stirnseite des Messrohrs angeordnet ist.

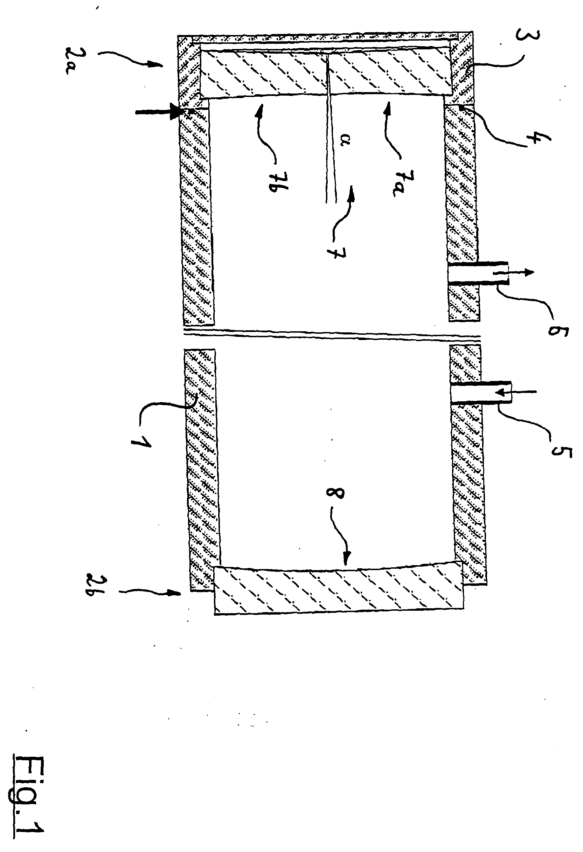

Gemäß Fig.1 besteht eine optische Langwegzelle aus einem hohlzylinderartigen Messrohr 1, das zu einer Stirnseite 2a hin mit einem Deckelelement 3 verschlossen ist. Zwischen dem Messrohr 1 und dem Deckelelement 3 ist ein Dichtring 4 aus einem elastomeren Material vorgesehen. Das Messrohr 1 weist weiterhin einen im Mittelbereich angeordneten Einlassstutzen 5 für das Messgas auf, welcher das Messrohr 1 über einen entfernt hierzu angeordneten Auslassstutzen 6 verlässt.

Innen an den einander gegenüberliegenden parallelen Stirnseiten 2a und 2b sind zueinander konvokal angeordnete sphärische Spiegel 7a, 7b und 8 vorgesehen. Die sphärischen Spiegel 7a, 7b und 8 dienen der Erzeugung einer optischen Wegstrecke durch wechselseitiges Reflektieren eines Lichtstrahls entlang des Messrohres 1. Der Lichtstrahl gelangt dabei durch eine - hier nicht erkennbare - stirnseitige optische Eintrittsöffnung in das Messrohr 1 hinein und gelangt nach Passieren der optischen Wegstrecke durch eine ebenfalls stirnseitige optische Austrittsöffnung aus dem Messrohr 1 heraus. Hier nachgeschaltet ist eine - ebenfalls nicht weiter dargestellte - sensortechnische Auswertungseinheit, welche die Absorptionsverluste des Lichtstrahls aufgrund des durch das Messrohr 1 geleiteten Gases ermittelt. Diese Absorptionsverluste sind ein Maß für die Gaskonzentrationen des Messgases.

Die an der Stirnseite 2a des Messrohres 1 benachbart zueinander angeordneten sphärischen Spiegel 7a und 7b sind gefertigt aus einem einzigen, sphärischen Spiegelelement 7, welches entlang einer Durchmesserlinie durch Sägen geteilt worden ist. Nach Zerteilung des Spiegelelements 7 wurden die sphärischen Spiegel 7a und 7b entsprechend eines Öffnungswinkels α zueinander verkippt und fixiert. Das als Ausgangsbauteil verwendete gemeinsame Spiegelelement 7 besteht aus einem runden, an den Innendurchmesser des Messrohres 1 angepassten konkaven Spiegel. Das relative Fixieren der beiden benachbarten sphärischen Spiegel 7a und 7b unter dem Öffnungswinkel α erfolgt mittels einer Aufnahmevorrichtung, welche hier im Deckelelement 3 verkörpert ist.

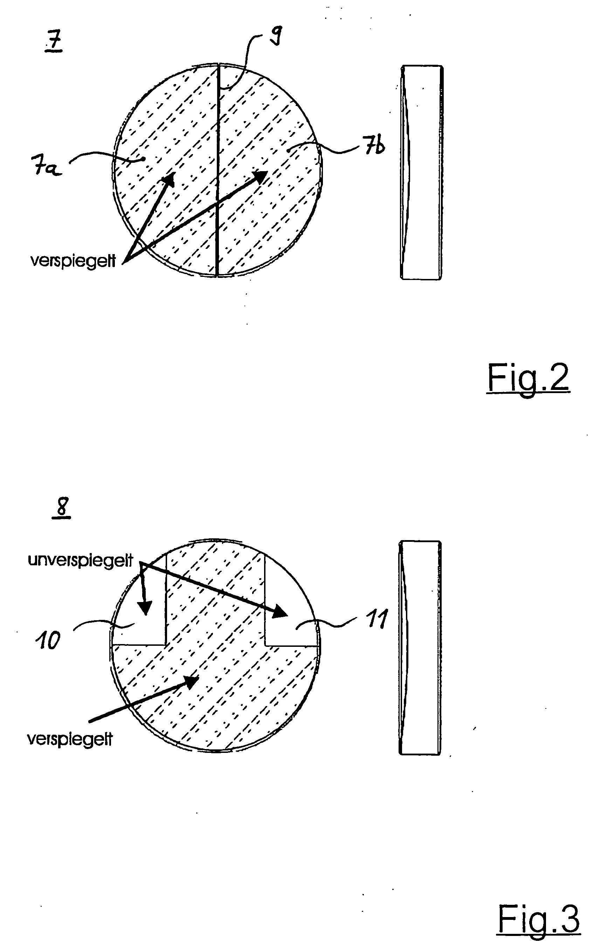

Aus der Figur 2 geht das geteilte Spiegelelement 7 mit dem entlang der Durchmesserlinie 9 verlaufenden Öffnungswinkel α hervor, wodurch die beiden benachbarten verkippt zueinander angeordneten sphärischen Spiegel 7a und 7b entstehen.

Gemäß Fig.3 weist der andere sphärische Spiegel 8 eine optische Eintrittsöffnung 10 für den Lichtstrahl sowie eine benachbart hierzu angeordnete optische Austrittsöffnung 11 für den Lichtstrahl auf. Zur Bildung der optischen Eintrittsöffnung 10 und der optischen Austrittsöffnung 11 ist der sphärische Spiegel 8 aus einem runden, konkaven Spiegel hergestellt, welcher aus einem für den Lichtstrahl transparenten Substrat besteht. Auf das transparente Substrat ist nur teilweise eine Verspiegelung aufgebracht. An den Stellen, wo das Substrat unverspiegelt bleibt, entsteht die optische Eintrittsöffnung 10 sowie die benachbarte optische Austrittsöffnung 11.

Insgesamt wird mit dem vorstehend beschriebenen Aufbau eine optische Langwegzelle zur Messung von Gaskonzentrationen realisiert, die sich durch Einfachheit und Robustheit auszeichnet und darüber hinaus eine justagefreie Montage ermöglicht.

### Bezugszeichenliste

- **1**: Messrohr
- **2**: Stirnseite
- **3**: Deckelelement
- **4**: Dichtring
- **5**: Einlassstutzen
- **6**: Auslassstutzen
- **7**: Spiegel (-element)
- **8**: Spiegel
- **9**: Durchmesserlinie
- **10**: Eintrittsöffnung
- **11**: Austrittsöffnung

## Patentansprüche

1. Optische Langwegzelle zur Messung von Gaskonzentrationen, umfassend ein hohlzylinderartiges Messrohr (1), an dessen gegenüberliegenden parallelen Stirnseiten (2a, 2b) zueinander konfokal angeordnete sphärische Spiegel (7, 8) zur Erzeugung einer optischen Wegstrecke durch wechselseitiges Reflektieren eines Lichtstrahl vorgesehen sind, der durch eine stirnseitige optische Eintrittsöffnung (10) in das Messrohr (1) gelangt und nach Passieren der optischen Wegstrecke durch eine ebenfalls stirnseitige optische Austrittsöffnung (11) das Messrohr (1) verlässt, um durch eine hier nachgeschaltete Auswertung der Absorptionsverluste des Lichtstrahls aufgrund eines durch das Messrohr (1) geleiteten Gases die Gaskonzentration zu ermitteln,
**dadurch gekennzeichnet, dass** mindestens zwei an einer Stirnseite (2a) des Messrohres (1) benachbart angeordnete sphärische Spiegel (7a, 7b) aus einem geteilten sphärischen Spiegelelement (7) gebildet sind, das zur Erzeugung der beiden sphärische Spiegel (7a, 7b) einen dazwischenliegenden Öffnungswinkel α aufweist.

2. Optische Langwegzelle nach Anspruch 1,
**dadurch gekennzeichnet, dass** das geteilte Spiegelelement (7) aus einem runden, an den Innendurchmesser des Messrohres (1) angepassten konkaven Spiegel besteht, der durch ein die beiden sphärischen Spiegel (7a, 7b) bildendes Teilen und Wiederzusammensetzen unter dem Öffnungswinkel α gefertigt ist.

3. Optische Langwegzelle nach Anspruch 1 oder 2,
**dadurch gekennzeichnet, dass** der Öffnungswinkel α mittels einer Aufnahmevorrichtung zum relativen Fixieren der beiden sphärischen Spiegel (7a, 7b) gebildet ist.

4. Optische Langwegzelle nach Anspruch 3,
**dadurch gekennzeichnet, dass** die Aufnahmevorrichtung in ein Deckelelement (3) integriert ist, mit welchem das Messrohr (1) stirnseitig verschlossen ist.

5. Optische Langwegzelle nach Anspruch 4,
**dadurch gekennzeichnet, dass** zur gasdichten Verbindung zwischen dem Messrohr (1) und dem lösbar hieran befestigten Deckelelement (3) ein dazwischen angeordneter Dichtring (4) aus einem elastomeren Material vorgesehen ist.

6. Optische Langwegzelle nach Anspruch 1 oder 2,
**dadurch gekennzeichnet, dass** der Öffnungswinkel α mittels einer Klebeverbindung zum relativen Fixieren der beiden sphärischen Spiegel (7a, 7b) gebildet ist.

7. Optische Langwegzelle nach einem der vorstehenden Ansprüche,
**dadurch gekennzeichnet, dass** der dem geteilten Spiegelelement (7) gegenüberliegende sphärische Spiegel (8) zur Bildung der optischen Eintrittsöffnung (10) und der optischen Austrittsöffnung (11) entsprechend zugeordnete, für den Lichtstrahl transparente Bereiche aufweist, so dass die optische Eintrittsöffnung (10) benachbart zur optischen Austrittsöffnung (11) an derselben Stirnseite (2b) des Messrohres (1) angeordnet ist.

8. Optische Langwegzelle nach Anspruch 7,
**dadurch gekennzeichnet, dass** der sphärische Spiegel (8) zur Bildung der optischen Eintrittsöffnung (10) und der optischen Austrittsöffnung (11) aus einem runden, konkaven Spiegel hergestellt ist, der aus einem für den Lichtstrahl transparenten Substrat besteht, auf dem nur teilweise eine Verspiegelung derart aufgebracht ist, dass die optische Eintrittsöffnung (10) und die optische Austrittsöffnung (11) unverspiegelt bleiben.

9. Optische Langwegzelle nach einem der vorstehenden Ansprüche,
**dadurch gekennzeichnet, dass** innerhalb des Messrohres (1) im Bereich der Spiegel (7, 8) elektrische Mittel zum Beheizen vorgesehen sind.

10. Optische Langwegzelle nach einem der vorstehenden Ansprüche,
**dadurch gekennzeichnet, dass** das Messrohr (1) mindestens einen im Mittelbereich angeordneten Einlassstutzen (5) für das Messgas aufweist, welches das Messrohr (1) über mindestens einen im Bereich der optischen Eintrittsöffnung (10) und/oder der Austrittsöffnung (11) angeordneten Auslassstutzen (6) verlässt.
